# FASCICULE DE BREVET EUROPEEN

(11) **EP 3 230 513 B1**
(45) Date de publication et mention de la délivrance du brevet: **01.05.2019**
(21) Numéro de dépôt: 15817556.2
(22) Date de dépôt: 08.12.2015
(51) Int. Cl.: D04H 5/04, B32B 5/26, B29C 70/08, D04H 5/12

(54) **ARMATURE TEXTILE POUR PULTRUSION ET SON PROCEDE DE REALISATION**
TEXTILE VERSTÄRKUNG FÜR PULTRUSION UND VERFAHREN ZUR HERSTELLUNG DAVON
TEXTILE REINFORCEMENT FOR PULTRUSION AND METHOD FOR THE PRODUCTION THEREOF

(30) Priorité: 08.12.2014 FR 1462086
(43) Date de publication de la demande: 18.10.2017
(73) Titulaire: Chomarat, Gilbert, 1223 Cologny (CH)
(72) Inventeur: Chomarat, Gilbert, 1223 Cologny (CH)
(74) Mandataire: Cabinet Poncet
(86) Numéro de dépôt international: PCT/IB2015/059439
(87) Numéro de publication internationale: WO 2016/092468

(56) Documents cités:
- WO-A1-95/34703
- DE-A1- 2 622 206
- FR-A1- 2 266 595
- GB-A- 1 226 378

## Description

### DOMAINE TECHNIQUE DE L'INVENTION

La présente invention concerne les armatures textiles utilisées comme produits de renforcement d'articles composites, c'est-à-dire d'articles à base de résine (polyester ou autre) armée d'une armature textile de renforcement.

L'invention concerne plus spécialement les armatures textiles destinées à la réalisation d'articles composites par un procédé de pultrusion.

La pultrusion est un procédé pour former de façon continue des matières plastiques incluant des éléments de renfort et qui présentent une section transversale constante. Pendant le procédé de pultrusion, le produit est tiré en sortie d'une filière dans laquelle les éléments de renfort sont surmoulés et imprégnés par une résine. La résine est généralement une matière plastique thermodurcissable. La filière elle-même est chauffée. En sortie de filière, après refroidissement, le produit est découpé selon les longueurs désirées, constituant ainsi des articles composites profilés renforcés par les éléments de renfort.

Les éléments de renfort sont généralement constitués de fibres, et forment ainsi une armature textile continue.

Dans son passage à travers la filière de pultrusion, l'armature textile continue subit des contraintes de freinage, et il est nécessaire de la mettre sous tension pour assurer son maintien en forme. L'entraînement de l'armature textile à travers la filière nécessite donc d'appliquer sur l'armature textile continue des efforts d'entraînement longitudinal, essentiellement en traction.

Simultanément, s'agissant d'un procédé continu, la pultrusion nécessite d'utiliser une armature textile continue, qui présente donc une dimension longitudinale beaucoup plus grande que ses dimensions transversales. Il en résulte que, sous l'action d'un effort de traction, une telle armature textile continue, qui est initialement plate, a tendance à se déformer en formant des ondulations dans le sens transversal, de la même manière que se déforme une cravate que l'on tire vers le bas. Si une telle déformation de l'armature textile se produit avant l'entrée dans la filière de pultrusion, cela réduit la largeur de l'armature et risque de produire des plis. Cette déformation de l'armature, et les risques de défauts qui en résultent, ont d'autant plus tendance à se produire lorsque l'armature présente une grande largeur au regard de son épaisseur.

On connaît des armatures textiles continues à base de fibres de verre continues, qui présentent l'intérêt de conférer aux produits réalisés par surmoulage de ces armatures une grande résistance mécanique grâce aux propriétés avantageuses de la fibre de verre. Ces armatures continues sont généralement sous forme d'une bande plate. Par exemple, un procédé pour réaliser une telle armature continue est décrit dans le document US 3,969,171 : les filaments de verre sortant de filière d'extrusion de verre sont rassemblés pour constituer des fils de verre que l'on vient déposer de façon aléatoire en toutes orientations sur un convoyeur à bande. Un liant est pulvérisé sur les fils de verre, puis traité dans un four. Ce procédé ne permet pas de maîtriser la direction de résistance mécanique assurée par la présence des fils de verre continus et il ne confère pas une résistance mécanique longitudinale suffisante pour une application de pultrusion.

Le document WO 95/34703 A1 décrit une armature textile pour réalisation de pièces composites par pultrusion. Cette armature comprend une couche à base de fibres de verre et de polyester, dans laquelle les fibres de verre sont sous forme de tronçons de fibres de verre enrobés de polyester et orientés de façon aléatoire. Lors de l'utilisation de cette armature dans un procédé de pultrusion, l'armature doit être combinée avec des filaments longitudinaux continus (roving) et des voiles extérieurs, les filaments longitudinaux continus ayant pour fonction de conférer à l'armature une résistance mécanique à l'allongement suffisante pour supporter la traction lors de la pultrusion. Cela complique sensiblement le procédé de pultrusion, par la nécessité d'assembler et de tenir en position dans la filière plusieurs éléments. Par ailleurs, avec une telle structure d'armature, il s'avère difficile de réaliser par pultrusion des profilés présentant une grande largeur (d'au moins 30 cm) et une qualité acceptable, notamment une résistance mécanique transversale acceptable.

Pour ces raisons notamment, les armatures textiles de renforcement qui ont été proposées jusqu'à ce jour ne présentent pas une structure satisfaisante qui peut supporter un procédé de pultrusion et réaliser des pièces profilées relativement larges.

### EXPOSE DE L'INVENTION

Un problème proposé par la présente invention est donc de concevoir une nouvelle structure d'armature textile qui soit particulièrement adaptée pour les procédés de pultrusion, par le fait qu'elle présente à la fois une bonne résistance à la traction longitudinale et une bonne résistance aux déformations transversales susceptibles de se produire pendant un procédé de pultrusion, de sorte que l'armature textile puisse être utilisée lors du procédé de pultrusion sans ajout d'autres éléments de renfort tels que des fils longitudinaux continus dans la filière.

Un autre problème proposé par la présente invention est de concevoir un procédé et un dispositif pour réaliser une nouvelle structure d'armature textile à base de fibres de verre qui soit particulièrement adaptée pour les procédés de pultrusion.

Pour atteindre ces buts ainsi que d'autres, l'invention propose une armature textile utilisable pour la réalisation de pièces composites par pultrusion, comprenant une couche centrale ayant des tronçons de fibres de verre enrobés de polyester, et dans laquelle :
- la couche centrale comprend en outre une âme centrale de renforcement, qui est apte à assurer un renforcement longitudinal et transversal, et qui est entourée par les tronçons de fibres de verre enrobés de polyester,
- au moins une couche superficielle en voile de fibres forme une des faces externes de l'armature textile.

Par le fait que les tronçons de fibres de verre de la couche centrale sont enrobés de polyester et entourent l'âme centrale de renforcement, l'armature textile présente une bonne résistance aux déformations transversales lors d'un procédé de pultrusion.

L'âme centrale de renforcement permet de donner à l'armature textile des propriétés de résistance mécanique dans la direction longitudinale et dans la direction transversale. Cela distingue sensiblement l'armature selon la présente invention vis-à-vis des armatures habituellement utilisées dans les techniques de pultrusion, qui sont essentiellement constituées de fils orientés en tous sens et de façon aléatoire. Une telle armature connue présente nécessairement une résistance mécanique longitudinale insuffisante, qui nécessite d'ajouter des fibres de verre longitudinales au moment de la pultrusion. Mais cet ajout de fibres de verre longitudinales ne participe pas à la résistance mécanique transversale de l'armature, qui reste insuffisante.

Selon l'invention, l'âme centrale de renforcement, structurée de façon à donner en outre à l'armature textile des propriétés de résistance mécanique dans la direction transversale, permet de réaliser des armatures de plus grande largeur, qui sont adaptées pour réaliser ensuite par pultrusion des profilés de grande largeur, sans risque de déformation intempestive.

La couche superficielle en voile de fibres forme une face externe lisse, qui peut conférer un état de surface particulièrement lisse et fini à la pièce composite réalisée par pultrusion à partir de l'armature ainsi constituée. En effet, la couche superficielle en voile de fibres, formée à partir de fibres relativement fines, présente un aspect lisse et occulte les fibres de la couche centrale de l'armature. Simultanément, la couche superficielle en voile de fibres forme une face externe d'armature qui facilite la fabrication de l'armature, en ce sens qu'elle évite le collage de l'armature en cours de fabrication sur un tapis transporteur.

En outre, la couche superficielle en voile de fibres peut être elle-même constituée de fibres colorées, qui donnent donc ensuite aux produits issus de la pultrusion un aspect coloré reprenant la couleur de la couche superficielle en voile de fibres. On peut ainsi produire des pièces colorées, et les changements de couleur d'une production à l'autre peuvent être très faciles en changeant simplement la couche superficielle en voile de fibres, sans avoir à procéder à des nettoyages complexes et onéreux de la filière pour changer, par exemple, la couleur de la résine injectée dans la filière.

De préférence, les tronçons de fibres de verre dans la couche centrale sont des tronçons de fibres obtenus à partir de mèches (roving) de fils de verre, produits couramment disponibles.

Les tronçons de fibres de verre dans la couche centrale peuvent avantageusement comprendre des fils de verre présentant un poids linéaire de 40 à 50 tex, c'est-à-dire de 40 à 50 grammes par kilomètre de fil. Les mèches de fils de verre peuvent avoir un poids linéaire de 600 à 2400 tex.

De préférence, le polyester qui enrobe les tronçons de fibres de verre dans la couche centrale est un polyester bisphénolique insaturé, soluble ou insoluble dans le styrène. Cela facilite sa fusion pour enrober les fibres de verre pendant la fabrication de l'armature textile.

En pratique, l'âme centrale de renforcement peut être formée de fibres structurées en tissage, ou en grille, ou en simples fils orientés de façon appropriée, par exemple des fils longitudinaux, ou un assemblage de fils longitudinaux et de fils transversaux.

De préférence, les fils ou fibres constituant l'âme centrale de renforcement sont fixés les uns aux autres, ce qui facilite le guidage et la pénétration des éléments de renfort dans la filière de pultrusion.

Dans le cas d'une grille, des fils de trame disjoints et des fils de chaîne disjoints sont entrecroisés en formant des mailles lâches, et sont fixés les uns aux autres par collage à leurs points de jonction.

L'intérêt d'une âme centrale structurée en grille est d'assurer à la fois une bonne résistance mécanique dans le sens longitudinal et dans le sens transversal, et de bénéficier du très faible coût de production d'une telle grille.

Les fibres formant l'âme centrale peuvent avantageusement être des fils continus de verre, lesquels peuvent avoir un poids linéaire individuel de 68 tex à 272 tex. En alternative on peut utiliser des mèches (roving) de fils continus de verre, lesdites mèches ayant un poids linéaire de mèche de 320 à 1200 tex.

Dans un autre mode de réalisation, l'armature textile selon l'invention peut comprendre deux couches superficielles en voile de fibres, lesdites couches superficielles formant les deux faces externes de l'armature textile.

Les couches superficielles peuvent être en polyester, en polyamide, ou en polypropylène, étant observé qu'elles sont constituées d'un matériau dont la température de fusion est supérieure à celle des résines polyester de la couche centrale, par exemple une température de fusion de l'ordre de 250 °C.

Dans la couche centrale, les tronçons de fibres de verre peuvent avantageusement avoir une longueur de 40 à 120 mm. On réalise ainsi un bon compromis entre la capacité des fibres à être orientées dans toutes les directions de manière aléatoire à l'intérieur de l'armature textile, et la capacité des fibres à conférer une grande résistance mécanique à l'armature textile.

En pratique, on pourra prévoir que, dans la couche centrale, les tronçons de fibres de verre sont en quantité de 150 à 2000 g par mètre carré.

Par ailleurs, dans la couche centrale, le polyester peut être en quantité de 3 % à 5 % du poids des fibres de verre.

Selon un autre aspect, la présente invention propose un procédé de fabrication d'une armature textile utilisable pour la réalisation de pièces composites par pultrusion, comportant les étapes successives suivantes :
a) au-dessus d'un tapis transporteur en déplacement dans une direction longitudinale, disposer un premier voile de fibres en polyester, polyamide ou polypropylène,
b) couper des mèches de fibres de verre et les faire tomber sur un premier rouleau à picots recevant simultanément une poudre de polyester, pour faire tomber sur ledit premier voile posé sur le tapis transporteur en déplacement un premier mélange de tronçons de fibres de verre et de poudre de polyester, la poudre de polyester étant choisie de façon à présenter une température de fusion inférieure à celle des fibres constituant le premier voile,
c) disposer une âme de renforcement en fibres de renfort sur le premier mélange de tronçons de fibres de verre et de poudre de polyester,
d) couper des mèches de fibres de verre et les faire tomber sur un second rouleau à picots recevant simultanément une poudre de polyester, pour faire tomber sur ladite âme de renforcement en fibres de renfort un second mélange de tronçons de fibres de verre et de poudre de polyester,
f) chauffer l'ensemble par passage dans un four de façon à fondre la poudre de polyester et assurer sa répartition autour des tronçons de fibres de verre, sans toutefois fondre les fibres du premier voile.

On réalise ainsi un procédé particulièrement simple et peu onéreux pour la fabrication de l'armature textile pour pultrusion.

De la sorte, on peut aussi conférer à l'armature textile des propriétés mécaniques avantageuses, en choisissant l'orientation des fibres de renfort dans l'âme.

De façon avantageuse, avant l'étape f), on peut prévoir une étape intermédiaire e) consistant à déposer, sur ledit second mélange de tronçons de fibres de verre et de poudre polyester, un second voile de polyester, de polyamide ou de polypropylène, constituant ainsi une seconde surface externe dépourvue de fibres de verre.

Le premier voile peut avantageusement être obtenu par cardage, et présenter une masse surfacique de 20 à 40 g par mètre carré.

De préférence, la poudre de polyester utilisée pour réaliser la couche centrale peut être en une résine polyester bisphénolique insaturée, soluble ou insoluble dans le styrène, et en quantité de 3 % à 5 % du poids des tronçons de fibres de verre.

En pratique, la poudre de polyester utilisée dans la couche centrale peut avoir la propriété de fondre lorsqu'elle est soumise à une température de 100 °C pendant deux minutes.

En outre, la poudre de polyester peut être sous forme de poudre sèche ou sous forme d'une émulsion de poudre dans l'eau.

Le ou les voiles de polyester utilisés pour réaliser la ou les surfaces externes peuvent avantageusement être colorés, conférant à l'armature, et ensuite au matériau pultrudé réalisé à partir de l'armature, une coloration dans la masse, résistante aux agressions extérieures, sans nécessiter une coloration supplémentaire du matériau pultrudé lui-même.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique de côté en coupe longitudinale d'une armature textile selon un premier mode de réalisation de l'invention ;
- la figure 2 est une vue schématique en coupe transversale de l'armature textile de la figure 1 ;
- la figure 3 est une vue schématique de côté en coupe longitudinale d'une armature textile selon un deuxième mode de réalisation de l'invention ;
- la figure 4 est une vue schématique en coupe transversale de l'armature textile de la figure 3 ;
- la figure 5 est une vue schématique de dessus de l'armature textile selon l'une quelconque des figures précédentes ;
- la figure 6 est une vue schématique de côté illustrant un dispositif et un procédé pour la réalisation de l'armature textile des figures 1 à 5.

### DESCRIPTION DES MODES DE REALISATION PREFERES

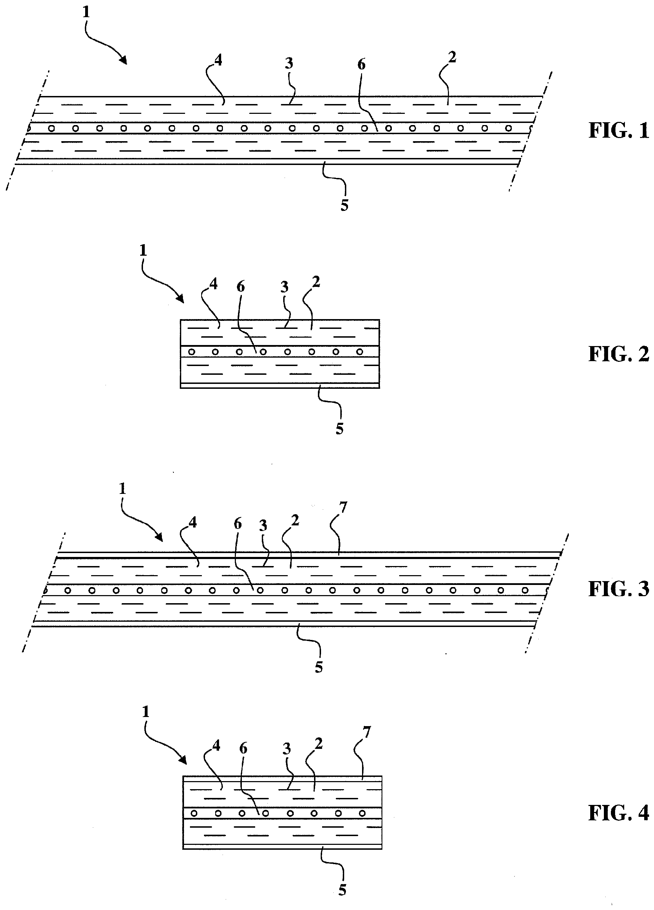

Dans le mode de réalisation illustré sur les figures 1 et 2, l'armature textile 1 comprend une couche centrale 2 à base de tronçons de fibres de verre 3 enrobés de polyester 4. Une couche superficielle 5, en voile de fibres, forme l'une des faces externes de l'armature textile 1, en l'occurrence la face externe inférieure.

Les tronçons de fibres de verre 3 sont des mèches de tronçons de fils monobrins, présentant un poids linéaire de 40 à 50 tex, et orientés de manière aléatoire entre la direction longitudinale et la direction transversale de l'armature textile 1.

Le polyester 4 qui enrobe les tronçons de fibres de verre 3 est un polyester bisphénolique insaturé, dont la température de fusion est de l'ordre de 100 °C, inférieure à la température de fusion du matériau synthétique constituant la couche superficielle 5.

La couche superficielle 5 peut être en polyester, en polyamide ou en polypropylène, sous réserve que sa température de fusion soit supérieure à celle du polyester constituant la couche centrale 2. Une température de fusion des fibres de la couche superficielle 5 peut être par exemple de 250 °C environ.

La couche centrale 2 comprend en outre une âme centrale de renforcement longitudinal 6, qui est entourée sur ses deux faces principales par les tronçons de fibres de verre 3 enrobés de polyester 4.

Dans la réalisation illustrée sur les figures 1 et 2, l'âme centrale de renforcement longitudinal 6 est formée de fibres essentiellement orientées dans le sens longitudinal et dans le sens transversal de l'armature textile 1.

Pour garantir une bonne résistance mécanique à la traction longitudinale, l'âme centrale de renforcement longitudinal 6 comprend essentiellement des fils longitudinaux. Le polyester entourant les fibres de verre assure une bonne résistance mécanique s'opposant à la déformation transversale de l'armature.

Pour garantir simultanément une bonne résistance mécanique dans le sens transversal de l'armature, l'âme centrale de renforcement longitudinal 6 est formée de fibres structurées en tissage, ou en grille, comportant ainsi des fils de chaîne et des fils de trame. L'avantage de la grille est d'être plus simple et plus rapide à réaliser que le tissage.

De préférence, dans l'âme centrale de renforcement longitudinal 6, les fibres sont fixées les unes aux autres, par collage, pour faciliter le passage en filière de pultrusion lors de l'utilisation de l'armature textile 1 pour réalisation d'un profilé par pultrusion.

Une armature textile 1 selon l'invention à âme centrale comportant des fils de chaîne et des fils de trame présente une résistance mécanique satisfaisante non seulement dans le sens longitudinal mais également dans le sens transversal, permettant l'utilisation d'une telle armature textile 1 pour réaliser des profilés de plus grande largeur.

Dans le second mode de réalisation, illustré sur les figures 3 et 4, on retrouve les éléments du mode de réalisation des figures 1 et 2. On retrouve ainsi la couche centrale 2, les fibres de verre 3, le polyester 4, la couche superficielle inférieure 5, l'âme centrale de renforcement longitudinal 6. La différence réside dans la présence supplémentaire d'une seconde couche superficielle 7 en voile de fibre et formant la seconde face externe de l'armature textile 1, à savoir la surface supérieure dans le cas illustré.

La seconde couche superficielle 7 peut être constituée du même matériau synthétique que la première couche superficielle 5.

L'une au moins des deux couches superficielles 5 et 7 peut être elle-même colorée dans la masse.

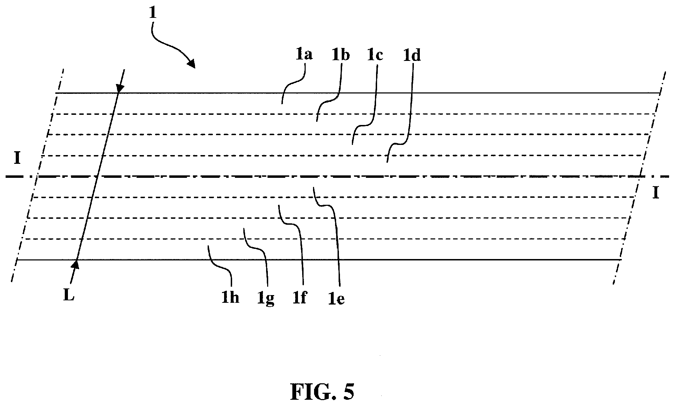

Comme on le voit sur la figure 5 en vue de dessus, l'armature textile selon l'invention peut être fabriquée sous forme d'une bande large, s'étendant longitudinalement selon un axe d'allongement I-I, et de largeur L compatible avec les capacités de fabrication des dispositifs habituels de production d'armatures textiles. Par exemple, la largeur L peut être d'environ 2 à 3 m, tandis que la longueur le long de l'axe I-I peut être beaucoup plus grande, l'armature pouvant être enroulée sur une bobine.

Sur cette figure, on a illustré le fait que l'armature textile 1 peut ensuite être découpée longitudinalement selon les lignes en pointillés pour former des bandes 1a, 1b, 1c, 1d, 1e, 1f, 1g et 1h, constituant chacune un renfort de pultrusion pour réaliser un profilé.

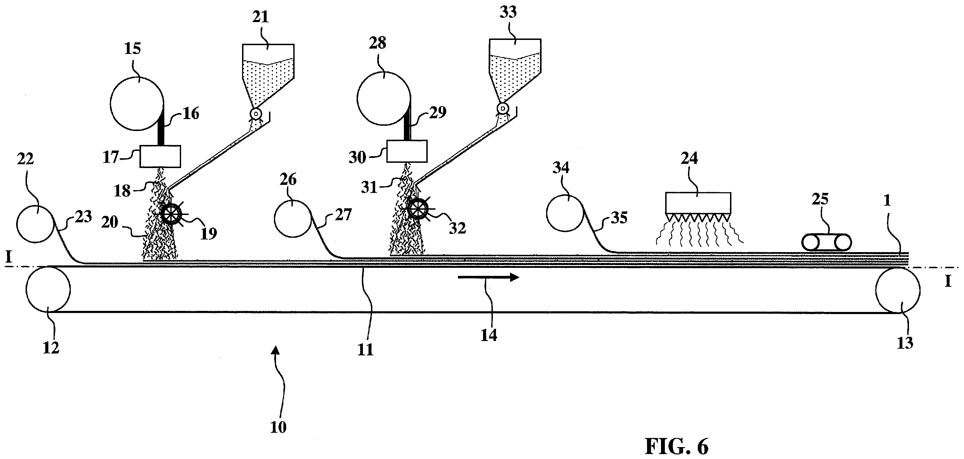

On considère maintenant la figure 6, qui représente schématiquement un dispositif pour la fabrication d'une armature textile 1 selon la présente invention, et qui permet d'illustrer simultanément le procédé de fabrication de l'armature textile 1.

Le dispositif 10 représenté sur cette figure comprend un tapis transporteur 11, par exemple sous forme d'un transporteur à bande en déplacement entre un rouleau d'entrée 12 et un rouleau de sortie 13 selon une direction longitudinale I-I dans le sens illustré par la flèche 14. Au voisinage du rouleau d'entrée 12 se trouve, au-dessus du tapis transporteur 11, un premier distributeur de mèches de fibres de verre 15 pouvant délivrer des mèches de fibres de verre 16 à un premier coupeur 17. Les tronçons de mèches de fibres de verre 18 sortant du premier coupeur 17 sont envoyés sur un premier rouleau à picots 19 qui éclate les tronçons de mèches de fibres de verre pour produire des tronçons de fibres de verre 20. Simultanément, un premier distributeur de poudre 21 distribue une poudre de polyester sur le premier rouleau à picots 19, lequel premier rouleau à picots 19 réalise simultanément le mélange de la poudre avec les tronçons de fibres de verre 20.

En amont du premier rouleau à picots 19, on prévoit un premier distributeur de voile 22 pour générer un premier voile 23 et pour le déposer sur le tapis transporteur 11.

On prévoit en outre, en aval du premier rouleau à picots 19, un distributeur d'âme 26, qui dépose sur le premier mélange de tronçons de fibres et de poudre déjà présent sur le tapis transporteur 11 une âme de renforcement 27.

En aval du distributeur d'âme 26, on prévoit un second distributeur de mèches de fibres de verre 28 qui délivre des mèches de fibres de verre 29 à un second coupeur 30 qui lui-même délivre des tronçons de mèches de fibres de verre 31 à un second rouleau à picots 32 qui lui-même éclate les tronçons de mèches de fibres de verre et les mélange à une poudre de polyester reçue d'un second distributeur de poudre 33 et qui les fait tomber sur l'âme de renforcement longitudinal 27, formant un second mélange.

En aval sur le tapis transporteur 11, on prévoit un four 24 apte à échauffer les éléments déposés sur le tapis transporteur 11, et, en aval du four 24, un ou plusieurs rouleaux presseurs 25 aptes à presser les matériaux en déplacement sur le tapis transporteur 11.

Le four 24 peut par exemple être réglé à une température de 180 °C environ, et la vitesse de déplacement du tapis transporteur 11 peut être telle que l'échauffement produit par le four 24 est suffisant pour fondre la poudre de polyester mais suffisamment faible pour éviter de fondre les autres constituants de l'armature.

Ainsi, lors de la fabrication de l'armature textile 1 par le dispositif 10, au-dessus du tapis transporteur 11 en déplacement dans la direction longitudinale I-I, on dispose un premier voile de polyester 23. Par le premier coupeur 17, on coupe des mèches de fibres de verre 16 et on les fait tomber sur le premier rouleau à picots 19 qui reçoit simultanément la poudre de polyester provenant du premier distributeur de poudre 21. Les tronçons de fibres de verre 20 mélangés à la poudre de polyester tombent sur le premier voile 23 lui-même posé sur le tapis transporteur 11 en déplacement, formant un premier mélange. Le distributeur d'âme 26 dépose sur le premier mélange l'âme de renforcement longitudinal 27, puis le second coupeur 30, le second distributeur de poudre 33 et le second rouleau à picots 32 produisent et déposent sur l'âme de renforcement longitudinal 27 un second mélange de tronçons de mèches de fibres de verre et de poudre de polyester. Lors du passage dans le four 24, la poudre de polyester fond et se répartit autour des tronçons de fibres de verre. Les rouleaux presseurs 25 favorisent la formation d'une plaque d'épaisseur constante en pressant la poudre fondue sur les tronçons de fibres de verre. Il en résulte en sortie du dispositif 10 une armature textile 1 selon le mode de réalisation des figures 1 et 2.

En aval du second rouleau à picots 32, on peut prévoir un second distributeur de voile 34, qui délivre un voile 35 et le pose sur l'ensemble des composants présents sur le tapis transporteur 11. Après passage dans le four 24 et les rouleaux presseurs 25, on obtient une armature textile 1 selon le mode de réalisation des figures 3 et 4.

A titre d'exemple préféré, la poudre de polyester peut être une résine de polyester bisphénolique insaturé. Une telle poudre est un produit disponible dans le commerce, par exemple auprès de la société COIM SPA et désigné par la référence FILCO 661.

En alternative, la poudre de polyester peut être une résine polyester bisphénolique insaturée utilisée en émulsion aqueuse, telle que celles qui sont disponibles dans le commerce auprès de la société COIM SPA sous les références FILCO 657 ou FILCO 659. Sa température de séchage est de 170°C à 200 °C, pendant 40 à 70 secondes. Après réticulation, elle devient insoluble dans le styrène et acquiert son pouvoir liant.

La présente invention n'est pas limitée aux modes de réalisation qui ont été explicitement décrits, mais elle en inclut les diverses variantes et généralisations contenues dans le domaine des revendications ci-après.

## Revendications

1. Armature textile (1) utilisable pour la réalisation de pièces composites par pultrusion, comprenant une couche centrale (2) ayant des tronçons de fibres de verre (3) enrobés de polyester (4),
**caractérisée en ce que** :
- la couche centrale (2) comprend en outre une âme centrale de renforcement (6) entourée par lesdits tronçons de fibres de verre (3) enrobés de polyester (4),
- au moins une couche superficielle (5) en voile de fibres forme une des faces externes de l'armature textile (1).

2. Armature textile (1) selon la revendication 1, **caractérisée en ce que** les tronçons de fibres de verre (3) dans la couche centrale (2) sont des tronçons de fibres obtenus à partir de mèches de fils de verre.

3. Armature textile (1) selon l'une des revendications 1 ou 2, **caractérisée en ce que** les tronçons de fibres de verre (3) dans la couche centrale (2) comprennent des fils de verre ayant un poids linéaire de 40 à 50 tex (40 à 50 grammes par kilomètre de fil).

4. Armature textile (1) selon l'une quelconque des revendications 1 à 3, **caractérisée en ce que** le polyester (4) enrobant les tronçons de fibres de verre (3) dans la couche centrale est un polyester bisphénolique insaturé, soluble ou insoluble dans le styrène.

5. Armature textile (1) selon l'une quelconque des revendications 1 à 4, **caractérisée en ce que** l'âme centrale de renforcement (6) est formée de fibres structurées en tissage, ou en grille, ou en fils longitudinaux et transversaux.

6. Armature textile (1) selon la revendication 5, **caractérisée en ce que** les fibres formant l'âme centrale de renforcement (6) sont des fils continus de verre ayant un poids linéaire individuel de 68 tex à 272 tex.

7. Armature textile (1) selon la revendication 5, **caractérisée en ce que** les fibres formant l'âme centrale de renforcement (6) sont des mèches de fils continus de verre et ont un poids linéaire de mèche de 320 tex à 1200 tex.

8. Armature textile (1) selon l'une quelconque des revendications 1 à 7, **caractérisée en ce qu'**elle comprend deux couches superficielles (5, 7) en voile de fibres, formant les deux faces externes de l'armature textile (1).

9. Armature textile (1) selon l'une quelconque des revendications 1 à 8, **caractérisée en ce que** la ou les couches superficielles (5, 7) sont en polyester, en polyamide ou en polypropylène, présentant une température de fusion supérieure à celle du polyester présent dans l'âme centrale de renforcement (6).

10. Armature textile (1) selon l'une quelconque des revendications 1 à 9, **caractérisée en ce que**, dans la couche centrale (2), les tronçons de fibres de verre (3) ont une longueur de 40 à 120 mm.

11. Armature textile (1) selon l'une quelconque des revendications 1 à 10, **caractérisée en ce que**, dans la couche centrale (2), les tronçons de fibres de verre (3) sont en quantité de 150 à 2000 grammes par mètre carré.

12. Armature textile (1) selon l'une quelconque des revendications 1 à 11, **caractérisée en ce que**, dans la couche centrale (2), le polyester est en quantité de 3 à 5% du poids des fibres de verre.

13. Procédé de fabrication d'une armature textile (1) utilisable pour la réalisation de pièces composites par pultrusion, **caractérisé en ce qu'**il comporte les étapes successives suivantes :
a) au-dessus d'un tapis transporteur (11) en déplacement dans une direction longitudinale (I-I), disposer un premier voile (23) de fibres en polyester, polyamide ou polypropylène,
b) couper des mèches de fibres de verre (16) et les faire tomber sur un premier rouleau à picots (19) recevant simultanément une poudre de polyester, pour faire tomber sur ledit premier voile (23) posé sur le tapis transporteur (11) en déplacement un premier mélange de tronçons de fibres de verre (3) et de poudre de polyester, la poudre de polyester étant choisie de façon à présenter une température de fusion inférieure à celle des fibres constituant le premier voile (23),
c) disposer une âme de renforcement (6) en fibres de renfort sur le premier mélange de tronçons de fibres de verre (3) et de poudre de polyester,
d) couper des mèches de fibres de verre (29) et les faire tomber sur un second rouleau à picots (32) recevant simultanément une poudre de polyester, pour faire tomber sur ladite âme de renforcement (6) en fibres de renfort un second mélange de tronçons de fibres de verre (3) et de poudre de polyester,
f) chauffer l'ensemble par passage dans un four (24) de façon à fondre la poudre de polyester et assurer sa répartition autour des tronçons de fibres de verre (3), sans toutefois fondre les fibres du premier voile (23).

14. Procédé selon la revendication 13, **caractérisé en ce qu'**il comprend, avant l'étape f), une étape intermédiaire e) consistant à déposer, sur ledit second mélange de tronçons de fibres de verre (3) et de poudre de polyester, un second voile (35) de polyester, de polyamide ou de polypropylène.

15. Procédé selon l'une des revendications 13 ou 14, **caractérisé en ce que** le premier voile (23) est obtenu par cardage et présente une masse surfacique de 20 à 40 g par mètre carré.

16. Procédé selon l'une quelconque des revendications 13 à 15, **caractérisé en ce que** la poudre de polyester utilisée pour réaliser la couche centrale est en une résine polyester bisphénolique insaturée soluble ou insoluble dans le styrène, et en quantité de 3% à 5 % du poids de tronçons de fibres de verre (3).

17. Procédé selon l'une quelconque des revendications 13 à 16, **caractérisé en ce que** la poudre de polyester a la propriété de fondre lorsqu'elle est soumise à une température de 100°C pendant deux minutes.

18. Procédé selon l'une quelconque des revendications 13 à 17, **caractérisé en ce que** la poudre de polyester est sous forme de poudre sèche ou d'une émulsion de poudre dans l'eau.

19. Procédé selon l'une quelconque des revendications 13 à 18, **caractérisé en ce qu'**on utilise un voile de polyester (23, 35) coloré.

20. Armature textile (1) selon l'une quelconque des revendications 1 à 12, **caractérisée en ce que** ladite au moins une couche superficielle (5) en voile de fibres est colorée dans la masse.

## Patentansprüche

1. Textilverstärkung (1), verwendbar zur Herstellung von Kompositteilen durch Pultrusion, aufweisend eine zentrale Schicht (2) mit Glasfaserabschnitten (3), die von Polyester (4) umhüllt sind,
**dadurch gekennzeichnet, dass**:
- die zentrale Schicht (2) außerdem einen zentralen Verstärkungskern (6) umfasst, der von den Glasfaserabschnitten (3), die von Polyester (4) umhüllt sind, umgeben ist,
- mindestens eine Oberflächenschicht (5) aus Faservlies eine der Außenflächen der Textilverstärkung (1) bildet.

2. Textilverstärkung (1) nach Anspruch 1, **dadurch gekennzeichnet, dass** die Glasfaserabschnitte (3) in der zentralen Schicht (2) Faserabschnitte sind, die aus Strängen von Glasfäden erhalten werden.

3. Textilverstärkung (1) nach einem der Ansprüche 1 oder 2, **dadurch gekennzeichnet, dass** die Glasfaserabschnitte (3) in der zentralen Schicht (2) Glasfäden mit einem linearen Gewicht von 40 bis 50 tex (40 bis 50 Gramm pro Kilometer Faden) aufweisen.

4. Textilverstärkung (1) nach einem der Ansprüche 1 bis 3, **dadurch gekennzeichnet, dass** das Polyester (4), das die Glasfaserabschnitte (3) in der zentralen Schicht umhüllt ein ungesättigter Polyester vom Bisphenol-Typ ist, löslich oder unlöslich in Styrol.

5. Textilverstärkung (1) nach einem der Ansprüche 1 bis 4, **dadurch gekennzeichnet, dass** der zentrale Verstärkungskern (6) aus Fasern gebildet ist, die durch Weben, als Gitter oder als longitudinale und transversale Fäden strukturiert sind.

6. Textilverstärkung (1) nach Anspruch 5, **dadurch gekennzeichnet, dass** die den zentralen Verstärkungskern (6) bildenden Fasern kontinuierliche Glasfäden mit einem individuellen linearen Gewicht von 68 tex bis 272 tex sind.

7. Textilverstärkung (1) nach Anspruch 5, **dadurch gekennzeichnet, dass** die den zentralen Verstärkungskern (6) bildenden Fasern als Stränge aus kontinuierlichen Glasfäden ausgebildet sind und ein lineares Stranggewicht von 320 tex bis 1200 tex aufweisen.

8. Textilverstärkung (1) nach einem der Ansprüche 1 bis 7, **dadurch gekennzeichnet, dass** diese zwei Oberflächenschichten (5, 7) aus Faservlies umfasst, die die beiden Außenseiten der Textilverstärkung (1) bilden.

9. Textilverstärkung (1) nach einem der Ansprüche 1 bis 8, **dadurch gekennzeichnet, dass** die eine oder die Oberflächenschicht(en) (5, 7) aus Polyester, Polyamid oder Polypropylen sind, mit einer Schmelztemperatur höher der des in dem zentralen Verstärkungskern (6) vorliegenden Polyesters.

10. Textilverstärkung (1) nach einem der Ansprüche 1 bis 9, **dadurch gekennzeichnet, dass** in der zentralen Schicht (2) die Glasfaserabschnitte (3) eine Länge von 40 bis 120 mm aufweisen.

11. Textilverstärkung (1) nach einem der Ansprüche 1 bis 10, **dadurch gekennzeichnet, dass** in der zentralen Schicht (2) die Glasfaserabschnitte (3) in einer Größenordnung von 150 bis 2000 Gramm pro Quadratmeter vorliegen.

12. Textilverstärkung (1) nach einem der Ansprüche 1 bis 11, **dadurch gekennzeichnet, dass** in der zentralen Schicht (2) das Polyester in einer Größenordnung von 3 bis 5 % bezogen auf das Gewicht der Glasfasern vorliegt.

13. Verfahren zur Herstellung einer Textilverstärkung (1), verwendbar zur Herstellung von Kompositteilen durch Pultrusion, **dadurch gekennzeichnet, dass** dieses die nachfolgenden, aufeinanderfolgenden Schritte aufweist:
a) auf einem Förderband (11), das sich in einer longitudinalen Richtung (I-I) bewegt, Platzieren eines ersten Faservlies (23) aus Polyester, Polyamid oder Polypropylen,
b) Schneiden von Strängen aus Glasfasern (16) und Fallenlassen dieser auf eine erste Stiftwalze (19), gleichzeitiges Aufnehmen eines Polyesterpulvers, um eine erste Mischung aus Glasfaserabschnitten (3) und Polyesterpulver auf das erste Vlies (23), das auf dem sich bewegenden Förderband (11) platziert ist, fallen zu lassen, wobei das Polyesterpulver derart ausgewählt wird, eine Schmelztemperatur aufzuweisen, die unterhalb der der das erste Vlies (23) bildenden Fasern liegt,
c) Platzieren eines zentralen Verstärkungskerns (6) aus Verstärkungsfasern auf der ersten Mischung aus Glasfaserabschnitten (3) und Polyesterpulver,
d) Schneiden von Strängen aus Glasfasern (29) und Fallenlassen dieser auf eine zweite Stiftwalze (32), gleichzeitiges Aufnehmen eines Polyesterpulvers, um eine zweite Mischung aus Glasfaserabschnitten (3) und Polyesterpulver auf den zentralen Verstärkungskern (6) aus Verstärkungsfasern fallen zu lassen,
f) Erwärmen der Gesamtanordnung durch Durchlaufen eines Ofens (24) derart, dass das Polyesterpulver geschmolzen und dessen Verteilung um die Glasfaserabschnitte (3) sichergestellt wird, ohne jedoch die Fasern des ersten Vlies (23) zu schmelzen.

14. Verfahren nach Anspruch 13, **dadurch gekennzeichnet, dass** dieses, vor dem Schritt f) einen Zwischenschritt e) aufweist, bestehend im Ablegen eines zweiten Vlies (35) aus Polyester, Polyamid oder Polypropylen auf die zweite Mischung aus Glasfaserabschnitten (3) und Polyesterpulver.

15. Verfahren nach einem der Ansprüche 13 oder 14, **dadurch gekennzeichnet, dass** das erste Vlies (23) durch Kadieren erhalten wird und eine flächenspezifische Masse von 20 bis 40 Gramm pro Quadratmeter aufweist.

16. Verfahren nach einem der Ansprüche 13 bis 15, **dadurch gekennzeichnet, dass** es sich bei dem Polyesterpulver, das zur Herstellung der zentralen Schicht verwendet wird, um ein ungesättigtes Polyesterharz vom Bisphenol-Typ, löslich oder unlöslich Styrol, handelt und dieses eine Größenordnung von 3 bis 5 % bezogen auf das Gewicht der Glasfasern (3) aufweist.

17. Verfahren nach einem der Ansprüche 13 bis 16, **dadurch gekennzeichnet, dass** das Polyesterpulver die Eigenschaft aufweist, zu schmelzen, sofern es einer Temperatur von 100°C für zwei Minuten ausgesetzt wird.

18. Verfahren nach einem der Ansprüche 13 bis 17, **dadurch gekennzeichnet, dass** das Polyesterpulver in der Form eines trockenen Pulvers oder als eine Emulsion in Wasser vorliegt.

19. Verfahren nach einem der Ansprüche 13 bis 18, **dadurch gekennzeichnet, dass** ein gefärbtes Polyestervlies (23, 35) verwendet wird.

20. Textilverstärkung (1) nach einem der Ansprüche 1 bis 12, **dadurch gekennzeichnet, dass** die mindestens eine Oberflächenschicht (5) aus Faservlies in der Masse eingefärbt ist.

## Claims

1. A textile reinforcement (1) which can be used to make composite parts by pultrusion, comprising a central layer (2) having segments of glass fiber (3) coated with polyester (4),
**characterized in that**:
- the central layer (2) furthermore comprises a central reinforcement core (6), surrounded by said segments of glass fiber (3) coated with polyester (4),
- at least one surface layer (5) of fiber web forms one of the outer surfaces of the textile reinforcement (1).

2. The textile reinforcement (1) as claimed in claim 1, **characterized in that** the glass fiber segments (3) in the central layer (2) are pieces of fiber obtained from rovings of glass thread.

3. The textile reinforcement (1) as claimed in one of claims 1 or 2, **characterized in that** the glass fiber segments (3) in the central layer (2) comprise glass threads having a linear weight of 40 to 50 tex (40 to 50 grams per kilometer of thread).

4. The textile reinforcement (1) as claimed in any one of claims 1 to 3, **characterized in that** the polyester (4) coating the glass fiber segments (3) in the central layer is an unsaturated bisphenol polyester, soluble or insoluble in styrene.

5. The textile reinforcement (1) as claimed in any one of claims 1 to 4, **characterized in that** the central reinforcement core (6) is formed of fibers structured by weaving, or by a grid, or by longitudinal and transverse threads.

6. The textile reinforcement (1) as claimed in claim 5, **characterized in that** the fibers forming the central reinforcement core (6) are continuous glass threads having an individual linear weight of 68 to 272 tex.

7. The textile reinforcement (1) as claimed in claim 5, **characterized in that** the fibers forming the central reinforcement core (6) are rovings of continuous glass threads and have a linear weight of the roving of 320 to 1200 tex.

8. The textile reinforcement (1) as claimed in any one of claims 1 to 7, **characterized in that** it comprises two surface layers (5, 7) of fiber web, forming the two external faces of the textile reinforcement (1).

9. The textile reinforcement (1) as claimed in any one of claims 1 to 8, **characterized in that** the surface layer(s) (5, 7) is/are made of polyester, polyamide, or polypropylene, having a melting point higher than that of the polyester present in the central reinforcement layer (6) .

10. The textile reinforcement (1) as claimed in any one of claims 1 to 9, **characterized in that**, in the central layer (2), the glass fiber segments (3) have a length of 40 to 120 mm.

11. The textile reinforcement (1) as claimed in any one of claims 1 to 10, **characterized in that** the glass fiber segments (3) are present in the central layer (2) in a quantity of 150 to 2000 g per square meter.

12. The textile reinforcement (1) as claimed in any one of claims 1 to 11, **characterized in that** in the central layer (2) the polyester is present in a quantity of 3 to 5% by weight of the glass fibers.

13. A method of fabrication of a textile reinforcement (1) usable in making composite parts by pultrusion, **characterized in that** it involves the following consecutive steps:
a) on top of a conveyor belt (11) moving in the longitudinal direction (I-I), arrange a first web (23) of fibers made of polyester, polyamide or polypropylene,
b) cut rovings of glass fiber (16) and let them drop onto a first pin roller (19) at the same time receiving a polyester powder, making drop onto said first web (23) placed on the moving conveyor belt (11) a first mixture of segments of glass fiber (3) and polyester powder, the polyester powder being chosen so as to have a melting point lower than that of the fibers making up the first web (23),
c) arrange a reinforcement core (6) of reinforcing fibers on the first mixture of glass fiber segments (3) and polyester powder,
d) cut rovings of glass fiber (29) and let them drop onto a second pin roller (32) at the same time receiving a polyester powder, making drop onto said reinforcement core (6) of reinforcing fibers a second mixture of glass fiber segments (3) and polyester powder,
f) heat the assemblage by passing through an oven (24) so as to melt the polyester powder and ensure its distribution around the glass fiber segments (3), yet without melting the fibers of the first web (23).

14. The method as claimed in claim 13, **characterized in that** it comprises, prior to step f), an intermediate step e) consisting in depositing, on said second mixture of glass fiber segments (3) and polyester powder, a second web (35) of polyester, polyamide, or polypropylene.

15. The method as claimed in one of claims 13 or 14, **characterized in that** the first web (23) is obtained by carding and has a surface density of 20 to 40 g per square meter.

16. The method as claimed in one of claims 13 to 15, **characterized in that** the polyester powder used to make the central layer consists of an unsaturated bisphenol polyester resin, soluble or insoluble in styrene, in a quantity of 3 to 5% by weight of glass fiber segments (3).

17. The method as claimed in one of claims 13 to 16, **characterized in that** the polyester powder has the property of melting when subjected to a temperature of 100° C for two minutes.

18. The method as claimed in one of claims 13 to 17, **characterized in that** the polyester powder is in the form of a dry powder or in the form of a powder emulsion in water.

19. The method as claimed in one of claims 13 to 18, **characterized in that** a colored polyester web is used (23, 35).

20. The textile reinforcement (1) as claimed in one of claims 1 to 12, **characterized in that** the said at least one surface layer (5) of fiber web is colored in the mass.
